# EUROPEAN PATENT SPECIFICATION

(11) **EP 0 900 643 B1**
(45) Date of publication and mention of the grant of the patent: **14.11.2001**
(21) Application number: 97310094.4
(22) Date of filing: 15.12.1997
(51) Int. Cl.: B29C 65/18, B29C 65/22

(54) **Handy electric heat sealing apparatus**
Elektrische Heisssiegelvorrichtung
Appareil électrique de soudure thermique

(30) Priority: 30.08.1997 GB 9718340
(43) Date of publication of application: 10.03.1999
(73) Proprietor: Chou, Ammy, Taipei Hsien, Taiwan (TW)
(72) Inventor: Chou, Ammy, Taipei Hsien, Taiwan (TW)
(74) Representative: Stonehouse, Sidney William

(56) References cited:
- US-A- 5 142 123
- US-A- 5 374 806

## Description

The present invention relates to electric heat sealing apparatus, and more particularly to an improved structure of handy electric heat sealing apparatus.

Various handy heat sealing apparatuses have been disclosed, and have appeared on the market. US Pat. No. 5,142,123 discloses an example of conventional handy heat sealing apparatus. The conventional handy heat sealing apparatuses are functional, however they are not safe in use.

The present invention consists in a handy electric heat sealing apparatus comprising a casing having a front end and a rear end, a compression spring mounted in the front end of the casing, a power supply circuit having contacts mounted in the casing and connected to opposite terminals of a power source, a heat sealing unit mounted in the front end of the casing being supported on the compression spring and movable against the loading of the compression spring relative to the casing, the press handle having a rear end pivoted to the rear end of the casing and a front end mounted with a heat insulative pad adapted to press an object against the heat sealing unit for permitting it to be sealed, the heat sealing unit comprising a heat insulative base having a projecting block raised from the heat insulative base, an electric heating wire fastened to the heat insulative base having contacts connected thereto adapted for connecting to the contacts of the power supply circuit, whereby the heat sealing unit comprises a cover shell at the front end of said casing extending over said heat insulative base and having a centre opening through which the projecting block of the heat insulative base projects out of the cover shell, characterised by a heat conductive sheet supported on the cover shell over its centre opening and disposed in contact with the electric heating wire of the heat sealing unit to conduct heat from and protect the electric heating wire, and a cover frame fastened to the cover shell to hold the heat conductive sheet in place.

The handy electric heat sealing apparatus may be adapted to have AC, a DC, or an AC/DC dual usage electrical supply.

The heat conductive sheet is preferably made from a meshed metal sheet coated with Teflon (Registered Trade Mark). Preferably the cover frame is detachably fastened to the cover shell to hold the heat conductive sheet in place. By having the cover frame detachable, the heat conductive sheet can be conveniently replaced.

The casing may comprise a chamber closed by a cover plate and having side walls at opposite sides. A rigid member, for example a metal case, may be mounted in the chamber between the side walls. There may be hooks on the side walls with which mounting flanges of the cover plate engage to retain the cover plate on the casing to close the chamber.

The casing may have a further chamber provided with an electric socket for receiving an electric plug. A stop rod may be disposed in this chamber adapted for holding an electric cable of the electric plug in place.

An embodiment of the present invention will now be described by way of example only with reference to the accompanying drawings, in which:
**Fig. 1** is an exploded front perspective view of a handy electric heat sealing apparatus according to one embodiment of the present invention;
**Fig. 2** is an exploded perspective view of the heat sealing unit of the handy electric heat sealing apparatus shown in Figure 1;
**Fig. 3** is a perspective view of an alternative form of heat insulative base for the heat sealing unit;
**Fig. 4** is a perspective view showing a safety switch disconnected from a casing of the apparatus;
**Fig. 5** is a top view showing the safety switch installed and turned;
**Fig. 6** is a perspective view of a part of the assembly showing a safety cutter holder moved out of a bottom chamber of the casing;
**Fig. 7** is an exploded perspective view showing a modification of the assembly;

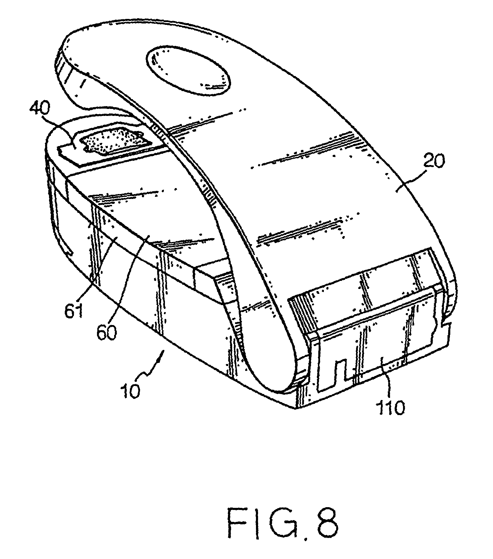

**Fig. 8** is a rear perspective view of the assembly;

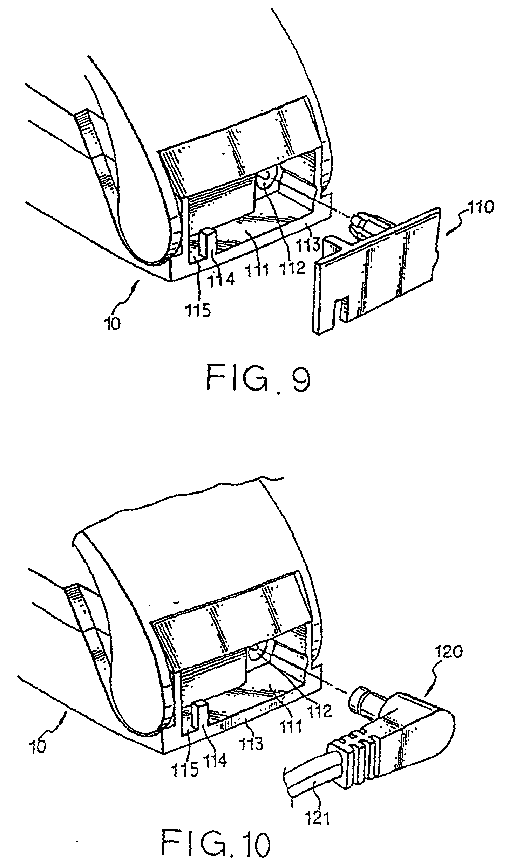

**Fig. 9** is a perspective view showing a rear cover removed from a rear chamber of the casing, and
**Fig. 10** is a perspective view which shows the relationship between an electric socket and a stop rod of the casing and an electric plug.

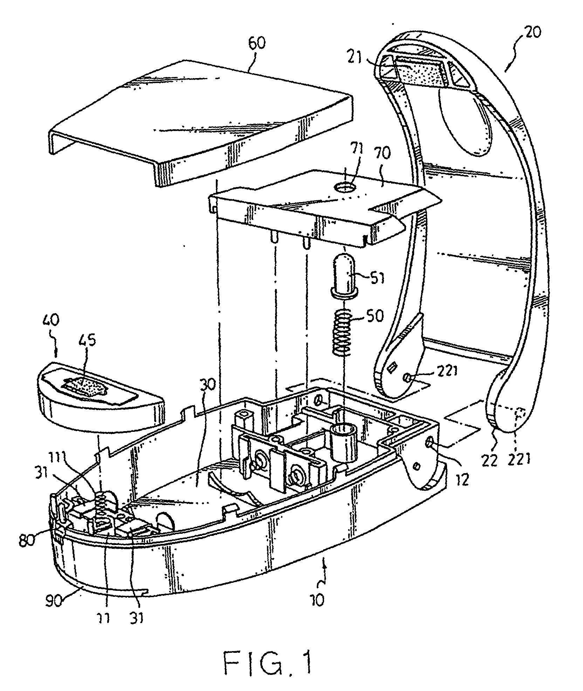

Referring to Figure 1, a handy electric heat sealing apparatus comprises a casing 10 defining a chamber 30 adapted for holding a battery set. A pair of metal contact plates 31 are mounted inside the casing 10 and are respectively connected to the two opposite terminals of the battery set mounted in the chamber 30. A cylindrical upright support 11 is disposed inside the casing 10 near its front end. A compression spring 111 is mounted on the upright support 11. A heat sealing unit 40 is supported on the compression spring 111, and is movable upwardly relative to the casing 10.

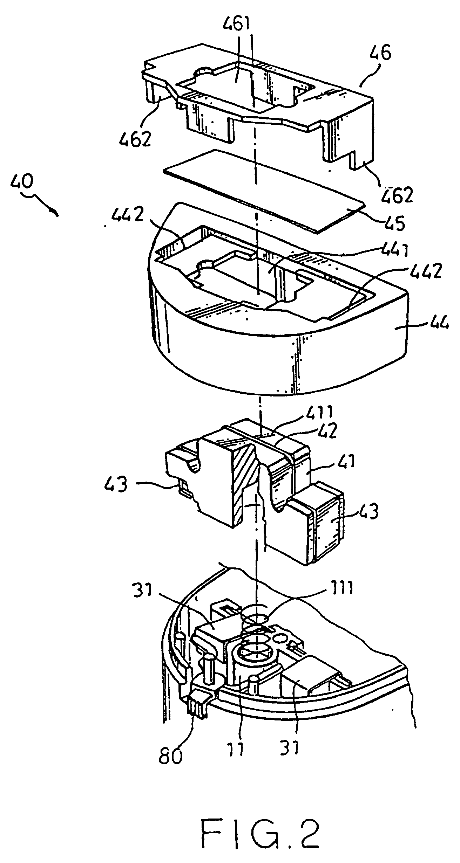

Referring to Figure 2, the heat sealing unit 40 comprises a heat insulative base 41, an electric heating wire 42, a pair of metal contact plates 43, a cover shell 44, a heat conductive sheet 45, and a cover frame 46. The heat insulative base 41 comprises a projecting block 411 raised centrally from its top side. The electric heating wire 42 is fastened to the projecting block 411 of the heat insulative base 41. The metal contact plates 43 are respectively fastened to two opposite sides of the heat insulative base 41 to hold down the electric heating wire 42. The cover shell 44 extends over a front part of the casing 10, over the heat insulative base 41, and has a centre opening through which the projecting block 411 of the heat insulative base 41 projects out of the cover shell 44, and two insertion slots 442 equally spaced from the centre opening 441 at two opposite sides. The heat conductive sheet 45 covers the projecting block 411 of the heat insulative base 41 over the electric heating wire 42, and is disposed outside the cover shell 44. The cover frame 46 is located on the cover shell 44 to hold the heat conductive sheet 45 in place. The cover frame 46 comprises two downward plug strips 462 at two opposite ends which are respectively plugged into the insertion slots 442 of the cover shell 44, and a centre opening 461 corresponding to the centre opening 441 of the cover shell 44. The heat conductive sheet 45 is preferably made from a meshed metal sheet coated with Teflon that protects the electric heating wire 42 and provides a smooth contact surface.

Referring to Figure 1 again, a press handle 20 is pivoted to the rear end of the casing 10 remote from the heat sealing unit 40. The press handle 20 comprises a heat insulative pad 21 transversely disposed at one end, and a pair of lugs 22 longitudinally and bilaterally disposed at an opposite end. The lugs 22 each have a respective stub pivot pin 221 at an inner side located in a respective pivot hole 12 at the rear end of the casing 10. Further, a spring 50 is mounted inside the casing 10 near its rear end and covered with a spring cap 51. The spring 50 imparts an upward pressure on the press handle 20, causing the press handle 20 to be urged to a lifted position in which the heat insulative pad 21 is well spaced from the heat conductive sheet 45 of the heat sealing unit 40. A rear cover plate 70 covers the rear end of the casing 10 and has a through hole 71 through which the spring cap 51 projects out of the rear cover plate 70. An intermediate cover plate 60 covers the middle part of the casing 10 between the heat sealing unit 40 and the rear cover plate 70.

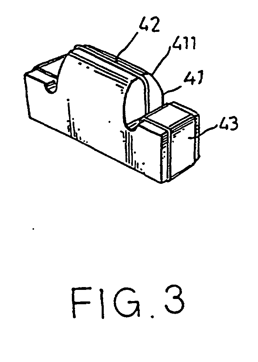

Referring to Figure 3 and Figure 2 again, the projecting block 411 of the heat insulative base 41 may be variously shaped. For example, the projecting block 411 shown in Figure 2 has a rectangular profile; the projecting block 411 shown in Figure 3 has a smoothly arched cross section.

Referring to Figures 1 and 2 again, when the press handle 20 is depressed, the heat sealing unit 40 is lowered against the loading of the compression spring 111, and the metal contact plates 43 of the heat sealing unit 40 are respectively forced into contact with the metal contact plates 31 in the casing 10, thereby causing electricity to be connected to the electric heating wire 42, heat being conducted from the wire through the heat conductive sheet 45 for sealing purposes. After sealing, the press handle 20 is released, and the heat sealing unit 40 is pushed upwards again by the compression spring 111 to disconnect its metal contact plates 43 from the metal contact plates 31 in the casing 10, thereby cutting off the electricity supply to the electric heating wire 42.

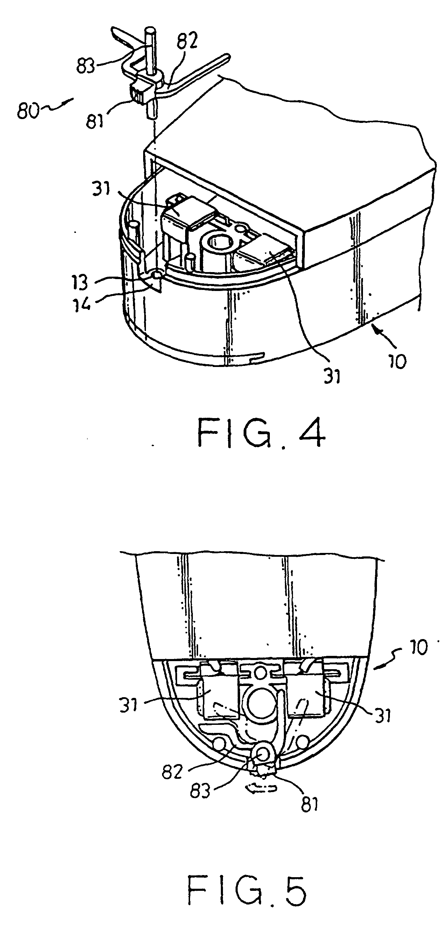

Referring now to Figures 1 and 4, a safety switch 80 is mounted in the front end of the casing 10. The safety switch 80 comprises a switch lever 81, an electrically insulative bumper 82, and a shaft 83. The shaft 83 is inserted into a hole 13 inside the front end of the casing 10. The switch lever 81 extends out of a front notch 14 of the casing 10. The electrically insulative bumper 82 has a generally V-shaped profile.

Referring to Figure 5, when the handy electric heat sealing apparatus is not in use, the switch lever 81 is shifted to an "off" position which forces the electrically insulative bumper 82 to move over the tops of the metal contact plates 31, as shown in phantom, and therefore the metal contact plates 43 of the heat sealing unit 40 are prohibited from touching the metal contact plates 31 in the casing 10. In order to use the handy electric heat sealing apparatus, the switch lever 81 must be shifted to and "on" position to move the electrically insulative bumper 82 away from the metal contact plates 31 in the casing 10, as shown in full lines, allowing the metal contact plates 43 of the heat sealing unit 40 to be forced into contact with the metal contact plates 31 in the casing 10 to close the circuit to the electric heating wire 42.

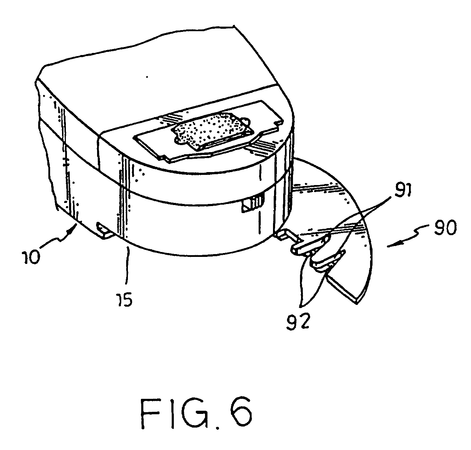

Referring to Figures 1 and 6, the casing 10 further comprises a bottom opening 15 at the front end. A swivel cutter holder 90 is pivoted to the casing 10. The swivel cutter holder 90 can be turned inwards and received in the bottom opening 15 of the casing 10 (see Figure 1), or turned outwards and extended out of the bottom opening 15 of the casing 10 (see Figure 6). The swivel cutter holder 90 comprises two notches 91 and a cutter blade 92 fastened in the notches 91. Because the cutter blade 92 is positioned within the notches 91, it does not cut the user's fingers when the user turns the swivel cutter holder 90 by the hand.

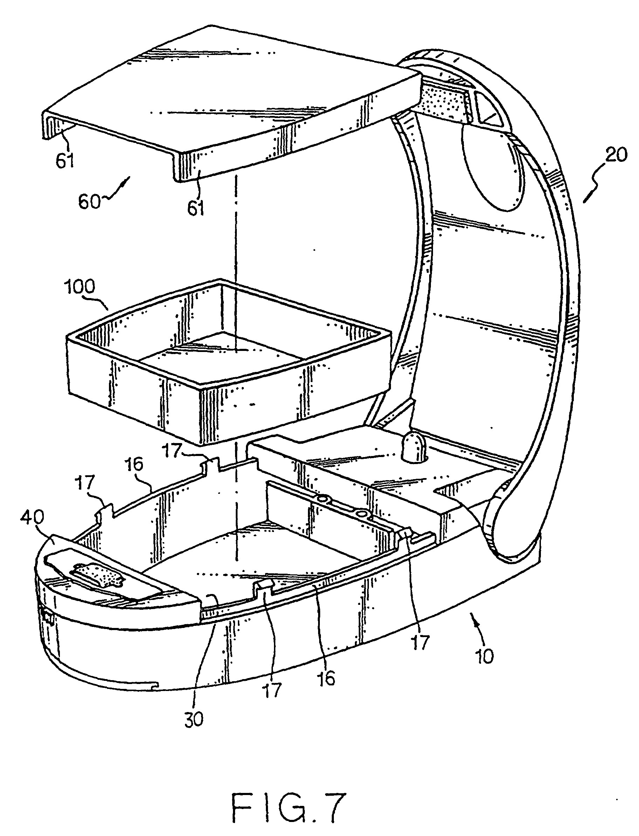

Figure 7 shows a modification of the handy electric heat sealing apparatus which has an AC power supply. In this form, the chamber 30 of the casing 10 comprises two upright side walls 16 and a plurality of hooks 17 respectively raised from the upright side walls 16. A metal case 100 is mounted within the chamber 30 of the casing 10 and retained between the vertical side walls 16. The intermediate cover plate 60 covers over the metal case 100, having two depending mounting flanges 61 at two opposite sides which are pushed into engagement with the hooks 17. The metal case 100 increases the weight of the handy electric heat sealing apparatus, and simultaneously imparts an outward pressure to the upright side walls 16 of the chamber 30 to urge the hooks 17 into engagement with the downward mounting flanges 61 of the intermediate cover plate 60.

Referring to Figures from 8 to 10, the casing 10 contains a rear chamber 111 closed by a removable rear cover 110. An electric socket 112 is provided in the rear chamber 111, an upright stop rod 114 is disposed at the entrance 113 of the rear chamber 111 and there is a retaining hole 115 at the entrance 113 of the rear chamber 111. When the rear cover 110 is removed from the rear chamber 111 of the casing 10, an electric plug 120 can be connected to the electric socket 112 to take electric power to the heat sealing unit of the handy electric heat sealing apparatus, and the electric cable 121 of the electric plug 120 can be inserted through the retaining hole 115 and extended out of the rear chamber 111 of the casing 10.

## Claims

1. A handy electric heat sealing apparatus comprising a casing (10) having a front end and a rear end, a compression spring (111) mounted in the front end of the casing (10), a power supply circuit having contacts (31) mounted in the casing (10) and connected to opposite terminals of a power source, a heat sealing unit (40) mounted in the front end of the casing (10) being supported on the compression spring (111) and movable against the loading of the compression spring relative to the casing (10), a press handle (20) having a rear end pivoted to the rear end of the casing (10) and a front end mounted with a heat insulative pad (21) adapted to press an object against the heat sealing unit (40) for permitting it to be sealed, the heat sealing unit (40) comprising a heat insulative base (41) having a projecting block (411) raised from the heat insulative base (41), an electric heating wire (42) fastened to the heat insulative base (41) having contacts (43) connected thereto adapted for connecting to the contacts (31) of the power supply circuit, whereby the heat sealing unit (40) comprises a cover shell (44) at the front end of said casing (10) extending over said heat insulative base (41) and having a centre opening (441) through which the projecting block (411) of the heat insulative base (41) projects out of the cover shell (44), **characterised by** a heat conductive sheet (45) supported on the cover shell (44) over its centre opening (441) and disposed in contact with the electric heating wire (42) of the heat sealing unit (40) to conduct heat from and protect the electric heating wire (45), and a cover frame (46) fastened to the cover shell (44) to hold the heat conductive sheet (45) in place.

2. A handy electric heat sealing apparatus according to claim 1, **characterised in that** the heat conductive sheet (45) is made from a meshed metal sheet coated with Teflon.

3. A handy electric heat sealing apparatus according to claim 1 or claim 2, **characterised in that** the cover shell (44) of the heat sealing unit (40) has insertion holes (442) spaced from its centre opening (441), and the cover frame (46) of the heat sealing unit (40) has plug strips (462) respectively plugged into the insertion holes (442) of the cover shell (44).

4. A handy electric heat sealing apparatus according to any preceding claim, **characterised in that** the cover frame (46) of the heat sealing unit (40) has a centre opening (461) corresponding to the centre opening (441) of the cover shell (44) through which a part of the heat conductive sheet (45) and the projecting block (411) of the heat insulative base (41) can be forced out of the cover frame (46).

5. A handy electric heat sealing apparatus according to any preceding claim, **characterised in that** a safety switch (80). is mounted in the casing (10) shiftable to prevent the contacts (43) of the heat sealing unit (40) from engaging the contacts (31) of the power supply circuit.

6. A handy electric heat sealing apparatus according to claim 5 **characterised in that** the safety switch (80) comprises a switch lever (81) extended out of the casing (10) and an electrically insulative bumper (82) connected to the switch lever (81), the electrically insulative bumper (82) being movable by the switch lever (81) between a first position in which the electrically insulative bumper (82) is disposed over the contacts (31) of the power supply circuit to prohibit their contact with the contacts (43) of the heat sealing unit (40), and a second position in which the electrically insulative bumper (82) is moved away from the contacts (31) of said power supply circuit for permitting the contacts (43) of the heat sealing unit (40) to be engaged with the contacts (31) of the power supply circuit.

7. A handy electric heat sealing apparatus according to any preceding claim, **characterised in that** the casing (10) has an opening (15) and a pivoted safety cutter means (90) movable in and out of the chamber (15), the safety cutter means comprising a cutter holder (90) having at least one notch (91) at one side and a cutter blade (92) fastened to the cutter holder (90) within the notch (91).

8. A handy electric heat sealing apparatus according to any preceding claim, **characterised in that** the casing (10) comprises a chamber (30), closed by a cover plate (60) and having side walls (16) at opposite sides, a rigid member (100) being mounted in the chamber (30) between the side walls (16), and there being hooks (17) on the side walls (16) with which mounting flanges (61) of the cover plate (60) engage to retain the cover plate (60) on the casing (10) to close the chamber (30).

9. A handy electric heat sealing apparatus according to any preceding claim, **characterised in that** the casing (10) comprises a chamber (111) in which is an electric socket (112) adapted for receiving an electric plug for taking electricity to the heat sealing unit (40) and a stop rod (114) is disposed in said chamber (111) spaced from the electric socket (112) adapted for holding the electric cable of the electric plug when the plug is connected to the electric socket (112).

10. A handy electric heat sealing apparatus according to claim 9, **characterised in that** the stop rod (114) is disposed at an entrance (113) of said chamber (111) there is a retaining hole (115) at the entrance (113).

## Patentansprüche

1. Tragbares Elektro-Heißsiegelgerät mit
- einem Gehäuse (10) mit einem vorderen und einem hinteren Ende,
- einer Druckfeder (111), die im vorderen Ende des Gehäuses (10) angebracht ist,
- einem Stromversorgungskreis mit Kontakten (31), die im Gehäuse (10) angebracht und mit den entgegengesetzten Polen einer Stromquelle verbunden sind,
- einer im vorderen Ende des Gehäuses (10) angebrachten Heißsiegeleinheit (40), die auf der Druckfeder (111) sitzt und gegen die Kraft der Druckfeder (111) in Bezug auf das Gehäuse (10) bewegbar ist, und
- einem Dnuckgriff (20), mit einem hinteren Ende, das am hinteren Ende des Gehäuses (10) schwenkbar angebracht ist, und einem vorderen Ende, an dem ein wärmeisolierendes Kissen (21) angebracht ist, mit dem ein Gegenstand an die Heißsiegeleinheit (40) angedrückt werden kann, um ihn zu siegeln,
wobei die Heißsiegeleinheit (40) umfasst
- eine wärmeisolierende Basis (41) mit einem überstehenden Block (411), der von der wärmeisolierenden Basis (41) nach oben ragt,
- einen elektrischen Heizdraht (42), der an der wärmeisolierenden Basis (41) befestigt ist und mit Kontakten (43), die sich mit den Kontakten (31) des Stromversorgungskreises in Berührung bringen lassen, verbunden ist, und
- eine Abdeckung (44) am vorderen Ende des Gehäuses (10), die sich über die wärmeisolierende Basis (41) erstreckt und eine zentrale Öffnung (441) aufweist, durch die der überstehende Block (411) der wärmeisolierenden Basis (41) aus der Abdeckung (44) ragt,
**gekennzeichnet durch**
ein wärmeleitendes Band (45), das über der zentralen Öffnung (441) auf der Abdeckung (44) aufliegt und den elektrischen Heizdraht (42) der Heißsiegeleinheit (40) berührt, um vom elektrischen Heizdraht (42) Wärme aufzunehmen und diesen zu schützen, und einen Abdeckrahmen (46), der an der Abdeckung (44) befestigt ist, um das wärmeleitende Band (45) festzuhalten.

2. Tragbares Elektro-Heißsiegelgerät nach Anspruch 1, **dadurch gekennzeichnet, dass** das wärmeleitende Band (45) aus einem mit Teflon beschichteten Metallgeflecht hergestellt ist.

3. Tragbares Elektro-Heißsiegelgerät nach Anspruch 1 oder 2, **dadurch gekennzeichnet, dass** die Abdeckung (44) der Heißsiegeleinheit (40) Einsetzlöcher (442) aufweist, die in einem bestimmten Abstand zur zentralen Öffnung (441) angeordnet sind, und der Abdeckrahmen (46) der Heißsiegeleinheit (40) Einsteckstreifen (462) aufweist, die in den Einsetzlöchern (442) der Abdeckung (44) stecken.

4. Tragbares Elektro-Heißsiegelgerät nach einem der vorhergehenden Ansprüche, **dadurch gekennzeichnet, dass** der Abdeckrahmen (46) der Heißsiegeleinheit (40) eine der zentralen Öffnung (441) der Abdeckung (44) entsprechende zentrale Öffnung (461) aufweist, durch die ein Teil des wärmeleitenden Bands (45) und des überstehenden Blocks (411) der wärmeisolierenden Basis (41) aus dem Abdeckrahmen (46) gedrückt werden können.

5. Tragbares Elektro-Heißsiegelgerät nach einem der vorhergehenden Ansprüche, **dadurch gekennzeichnet, dass** im Gehäuse (10) ein Sicherheitsschalter (80) angebracht ist, der sich so einstellen lässt, dass eine Berührung zwischen den Kontakten (43) der Heißsiegeleinheit (40) und den Kontakten (31) des Stromversorgungskreises verhindert wird.

6. Tragbares Elektro-Heißsiegelgerät nach Anspruch 5, **dadurch gekennzeichnet, dass** der Sicherheitsschalter (80) einen aus dem Gehäuse (10) ragenden Umschalthebel (81) und einen mit dem Umschalthebel (81) verbundenen elektrisch isolierenden Puffer (82) umfasst, wobei der elektrisch isolierende Puffer (82) mit dem Umschalthebel (81) zwischen einer ersten Stellung, in der sich der elektrisch isolierende Puffer (82) über den Kontakten (31) des Stromversorgungskreises befindet und somit verhindert, dass diese die Kontakte (43) der Heißsiegeleinheit (40) berühren, und einer zweiten Stellung, in der der elektrisch isolierende Puffer (82) von den Kontakten (31) des Stromversorgungskreises entfernt ist, so dass die Kontakte (43) der Heißsiegeleinheit (40) die Kontakte (31) des Stromversorgungskreises berühren können, hin und her bewegt werden kann.

7. Tragbares Elektro-Heißsiegelgerät nach einem der vorhergehenden Ansprüche, **dadurch gekennzeichnet, dass** das Gehäuse (10) eine Kammer (15) und eine schwenkbare Sicherheitsschneideeinrichtung (90), die in die Kammer (15) hinein- und aus dieser herausbewegt werden kann, aufweist, wobei die Sicherheitsschneideeinrichtung einen Messerhalter (90) mit mindestens einer Einkerbung (91) auf einer Seite und eine in der Einkerbung (91) am Messerhalter (90) befestigte Messerklinge (92) umfasst.

8. Tragbares Elektro-Heißsiegelgerät nach einem der vorhergehenden Ansprüche, **dadurch gekennzeichnet, dass** das Gehäuse (10) eine Kammer (30) umfasst, die mit einer Abdeckplatte (60) abgedeckt ist und beiderseits Seitenwände (16) aufweist, wobei in der Kammer (30) zwischen den Seitenwänden (16) ein unbiegsames Element (100) angebracht ist und sich an den Seitenwänden (16) Haken (17) befinden, mit denen Befestigungsflansche (61) der Abdeckplatte (60) in Eingriff sind, um die Abdeckplatte (60) am Gehäuse (10) zu halten und die Kammer (30) zu schließen.

9. Tragbares Elektro-Heißsiegelgerät nach einem der vorhergehenden Ansprüche, **dadurch gekennzeichnet, dass** das Gehäuse (10) eine Kammer (111) umfasst, in der sich eine Buchse (112) für einen Stecker zur Versorgung der Heißsiegeleinheit (40) mit Strom befindet, wobei in der Kammer (111) in einem bestimmten Abstand zur Buchse (112) ein Rückhaltestab (114) zum Halten des Elektrokabels des in der Buchse (112) eingesteckten Steckers angeordnet ist.

10. Tragbares Elektro-Heißsiegelgerät nach Anspruch 9, **dadurch gekennzeichnet, dass** der Rückhaltestab (114) am Eingang (113) der Kammer (111) angeordnet ist und sich an diesem Eingang (113) eine Rückhalteöffnung (115) befindet.

## Revendications

1. Dispositif de thermoscellage électrique maniable comprenant un boîtier (10) comportant une extrémité avant et une extrémité arrière, un ressort de compression (111) monté dans l'extrémité avant du boîtier (10), un circuit d'alimentation comportant des contacts (31) montés dans le boîtier (10) et reliés aux bornes opposées d'une source d'alimentation, une unité de thermoscellage (40) montée dans l'extrémité avant du boîtier (10) étant supportée sur le ressort de compression (111) et mobile en s'opposant à la charge du ressort de compression par rapport au boîtier (10), une poignée d'application de pression (20) comportant une extrémité arrière qui pivote par rapport à l'extrémité arrière du boîtier (10) et une extrémité avant montée avec un tampon d'isolation thermique (21) conçu pour presser un objet contre l'unité de thermoscellage (40) en vue de permettre qu'il soit scellé, l'unité de thermoscellage (40) comprenant une base d'isolation thermique (41) comportant un bloc faisant saillie (411) surélevé par rapport à la base d'isolation thermique (41), un fil de chauffage électrique (42) fixé à la base d'isolation thermique (41) comportant des contacts (43) reliés à celui-ci conçus en vue d'une connexion aux contacts (31) du circuit d'alimentation et d'où il résulte que l'unité de thermoscellage (40) comprend une coque de protection (44) au niveau de l'extrémité avant dudit boîtier (10) s'étendant sur ladite base d'isolation thermique (41) et comportant une ouverture centrale (441) à travers laquelle le bloc faisant saillie (411) de la base d'isolation thermique (41) fait saillie hors de la coque de protection (44), **caractérisé par** une feuille conductrice de chaleur (45) supportée sur la coque de protection (44) sur son ouverture centrale (441) et disposée en contact avec le fil de chauffage électrique (42) de l'unité de thermoscellage (40) afin de conduire de la chaleur depuis le fil de chauffage électrique (45) et protéger celui-ci, et une structure de protection (46) fixée à la coque de protection (44) afin de maintenir la feuille conductrice de chaleur (45) en place.

2. Dispositif de thermoscellage électrique maniable selon la revendication 1, **caractérisé en ce que** la feuille conductrice de chaleur (45) est faite à partir d'une feuille en toile métallique revêtue de Téflon.

3. Dispositif de thermoscellage électrique maniable selon la revendication 1 ou 2, **caractérisé en ce que** la coque de protection (44) de l'unité de thermoscellage (40) comprend des trous d'insertion (442) espacés de son ouverture centrale (441), et la structure de protection (46) de l'unité de thermoscellage (40) comprend des bandes d'insertion (462) respectivement insérées dans les trous d'insertion (442) de la coque de protection (44).

4. Dispositif de thermoscellage électrique maniable selon l'une quelconque des revendications précédentes, **caractérisé en ce que** la structure de protection (46) de l'unité de thermoscellage (40) comporte une ouverture centrale (461) correspondant à l'ouverture centrale (441) de la coque de protection (44) à travers laquelle une partie de la feuille conductrice de chaleur (45) et le bloc faisant saillie (411) de la base d'isolation thermique (41) peuvent être forcés hors de la structure de protection (46).

5. Dispositif de thermoscellage électrique maniable selon l'une quelconque des revendications précédentes, **caractérisé en ce qu'**un interrupteur de sécurité (80) est monté dans le boîtier (10), pouvant être décalé afin d'empêcher que les contacts (43) de l'unité de thermoscellage (40) viennent en contact avec les contacts (31) du circuit d'alimentation.

6. Dispositif de thermoscellage électrique maniable selon la revendication 5, **caractérisé en ce que** l'interrupteur de sécurité (80) comprend un levier d'interrupteur (81) s'étendant hors du boîtier (10) et un butoir électriquement isolant (82) relié au levier d'interrupteur (81), le butoir électriquement isolant étant mobile grâce au levier d'interrupteur (81) entre une première position à laquelle le butoir électriquement isolant (82) est disposé sur les contacts (31) du circuit d'alimentation afin d'empêcher leur contact avec les contacts (43) de l'unité de thermoscellage (40), et une seconde position à laquelle le butoir électriquement isolant (82) est déplacé à l'écart des contacts (31) dudit circuit d'alimentation afin de permettre que les contacts (43) de l'unité de thermoscellage (40) soient en contact avec les contacts (31) du circuit d'alimentation.

7. Dispositif de thermoscellage électrique maniable selon l'une quelconque des revendications précédentes, **caractérisé en ce que** le boîtier (10) comporte une ouverture (15) et un moyen d'outil de coupe de sûreté pivotant (90) mobile dans la chambre (15) et hors de celle-ci, le moyen d'outil de coupe de sûreté comprenant un porte-outil de coupe (90) comportant au moins une encoche (91) au niveau d'un côté et une lame d'outil de coupe (92) fixée au porte-outil de coupe (90) à l'intérieur de l'encoche (91).

8. Dispositif de thermoscellage électrique maniable selon l'une quelconque des revendications précédentes, **caractérisé en ce que** le boîtier (10) comprend une chambre (30), fermée par une plaque de protection (60) et comportant des parois latérales (16) au niveau de côtés opposés, un élément rigide (100) étant monté dans la chambre (30) entre les parois latérales (16), et il existe des crochets (17) sur parois latérales (16) avec lesquels des rebords de montage (61) de la plaque de protection (60) viennent en prise pour retenir la plaque de protection (60) sur le boîtier (10) afin de fermer la chambre (30).

9. Dispositif de thermoscellage électrique maniable selon l'une quelconque des revendications précédentes, **caractérisé en ce que** le boîtier (10) comprend une chambre (111) dans laquelle se trouve une douille électrique (112) conçue pour recevoir une fiche électrique afin de conduire de l'électricité vers l'unité de thermoscellage (40) et une tige de butée (114) est disposée dans ladite chambre (111), de façon espacée de la douille électrique (112) conçue pour maintenir le câble électrique de la fiche électrique lorsque la fiche est reliée à la douille électrique (112).

10. Dispositif de thermoscellage électrique maniable selon la revendication 9, **caractérisé en ce que** la tige de butée (114) est disposée au niveau d'une entrée (113) de ladite chambre (111), et **en ce qu'**il existe un trou de retenue (115) au niveau de l'entrée (113).
